# EUROPÄISCHE PATENTSCHRIFT

(11) **EP 1 545 271 B1**
(45) Veröffentlichungstag und Bekanntmachung des Hinweises auf die Patenterteilung: **28.06.2006**
(21) Anmeldenummer: 03753357.7
(22) Anmeldetag: 21.08.2003
(51) Int. Cl.: A47C 20/04, H02K 7/06

(54) **ELEKTROMOTORISCHER MÖBELANTRIEB**
ELECTROMOTIVE FURNITURE DRIVE
ENTRAINEMENT DE MEUBLE PAR MOTEUR ELECTRIQUE

(30) Priorität: 16.09.2002 DE 20214375 U; 10.02.2003 DE 20302137 U
(43) Veröffentlichungstag der Anmeldung: 29.06.2005
(73) Patentinhaber: Dewert Antriebs- und Systemtechnik GmbH, 32278 Kirchlengern (DE)
(72) Erfinder: HANEBALL, Frank, 32839 Steinheim (DE)
(74) Vertreter: Dantz, Jan Henning
(86) Internationale Anmeldenummer: PCT/EP2003/009262
(87) Internationale Veröffentlichungsnummer: WO 2004/028305

(56) Entgegenhaltungen:
- EP-A- 0 146 914
- EP-A- 1 205 687
- US-A- 2 541 529
- US-A1- 2002 066 325
- US-B1- 6 240 800

## Beschreibung

Die vorliegende Erfindung betrifft einen elektromotorischen Möbelantrieb mit wenigstens einem Antriebsgetriebemotor und mit mindestens einer Spindel, auf die eine Spindelmutter aufgesetzt ist und bei dem zumindest die Spindel beispielsweise die Spindeln und die Spindelmutter beziehungsweise die Spindelmuttern in einem Gehäuse angeordnet ist beziehungsweise sind.

Der in Frage kommende elektromotorische Möbelantrieb kann als Einzelantrieb oder als Doppelantrieb ausgelegt sein. Der Einzelantrieb ist mit einem Antriebsgetriebemotor, einer Spindel und mit einer Spindelmutter ausgestattet, während der Doppelantrieb mit einem oder mit zwei Antriebsgetriebemotoren, mit zwei Spindeln und mit zwei Spindelmuttern ausgestattet ist. Üblicherweise ist die Spindelmutter gegen Drehung gesichert. Demzufolge fährt jede Spindelmutter in Längsrichtung der Spindel je nach Drehrichtung der Spindel hin und her. Es sind jedoch auch Ausführungsformen bekannt, bei denen jedes Antriebsglied als Rotationsbauteil mit einer Innengewindebohrung ausgebildet ist, so dass im Betriebszustand der Antrieb selbst die Spindelmutter ist, da der gesamte Antrieb auf der Spindel hin und her fährt, die sich jedoch selbst nicht dreht.

Die Gehäuse der in Rede stehenden Möbelantriebe sind aus einem Kunststoff gefertigt. Zur Herstellung im Spritzgießverfahren sind kostenaufwendige Werkzeuge erforderlich, die einen beträchtlichen Teil der Herstellkosten des elektromotorischen Möbelantriebes ausmachen. Da es sich bei den Möbelantrieben um Massenprodukte handelt, die nach Möglichkeit kostengünstig hergestellt werden sollen, sind deshalb die zwar bewährten, jedoch teuren Gehäuse aus Kunststoff nicht als Idealzustand anzusehen. Außerdem sind Kunststoffe nur relativ gering belastbar, so dass aufwendige Verstärkungsrippen oder sonstige Verstärkungsbauteile notwendig sind. Zum Einbau der elektromotorischen Möbelantriebe sind insbesondere im Sessel-Bereich relativ kleine Einbauräume vorhanden, so dass die Forderung besteht, dass derartige Möbelantriebe kompakt gebaut sind. Es ist deshalb besonders bei Doppelantrieben üblich, dass die Antriebsmotoren in Töpfe eingesetzt werden, die gegenüber den Seitenflächen des Gehäuses vorstehen. Da diese Töpfe Teil des Gehäuses sind, sind die Antriebsmotoren demzufolge im Inneren des Gehäuses montiert.

Ein elektromotorischen Möbelantrieb ist aus EP1205 687 bekannt. Der Erfindung liegt die Aufgabe zugrunde, einen elektromotorischen Möbelantrieb der eingangs näher beschriebenen Art so zu gestalten, dass die Kosten zur Herstellung des Gehäuses gesenkt werden, und dass die auftretenden Kräfte ohne Beschädigung der Bauteile abgeleitet werden können und dass auch die Montage vereinfacht wird.

Die gestellte Aufgabe wird gemäß einem ersten Vorschlag gelöst, indem das Gehäuse einen durchgehenden Profilschienenabschnitt aufweist und dass der Antriebsmotor derart zum Profilschienenabschnitt steht, dass der Abtriebszapfen des Antriebsmotors durch den Profilschienenabschnitt hindurchgeführt oder außerhalb des Profilschienenabschnittes steht.

Die Verwendung eines Profilschienenabschnittes als Teil oder an Stelle des Gehäuses bietet viele Vorteile. So kann dieser aus einem hoch belastbaren Material hergestellt werden, welches auch noch bei erhöhten Temperaturen die gleiche Festigkeit hat. Dabei können je nach Belastung metallische aber auch nichtmetallische Materialien zum Einsatz kommen. Außerdem lassen sich derartige Materialien durch Kaltverformung bearbeiten. Ferner ist eine spanlose Bearbeitung, beispielsweise durch Stanzen möglich. Darüber hinaus können handelsübliche Profilschienen verwendet werden, die von den einschlägigen Herstellern in großen Mengen und demzufolge kostengünstig produziert werden. Der Profilschienenabschnitt ist das tragende Bauteil des elektromotorischen Möbelantriebes. Der Profilschienenabschnitt bietet aufgrund seines Querschnittes eine hohe Belastbarkeit, so dass die Beschädigung von Antriebsteilen ausgeschlossen werden kann. Bei einer entsprechenden Wahl der Querschnitte wird auch die Montage vereinfacht. Aufgrund der Stabilität des Profilschienenabschnittes ist es möglich, die Spindel in einfachster Weise zu lagern.

Ferner ist noch vorteilhaft, dass die gesamten Kräfte über den Profilschienenabschnitt abgeleitet werden können, wenn der elektromotorische Möbelantrieb entsprechend ausgelegt ist. Der Abtriebszapfen des Antriebsmotors kann entweder durch eine in den Profilschienenabschnitt eingebrachte Bohrung oder Stanzung geführt werden, er kann jedoch auch außerhalb des Profilschienenabschnittes stehen. Die jeweils verwendete Bauart richtet sich auch nach dem Verwendungszweck des elektromotorischen Möbelantriebes. Dadurch läßt sich eine äußerst kompakte Bauweise erreichen, so dass auch der elektromotorische Möbelantrieb in äußerst kleine Einbauräume montiert werden kann. Wenn der Abtriebszapfen des Antriebsmotors außerhalb des Profilschienenabschnittes steht, ergibt sich auch noch der Vorteil, dass dieser durch die Bohrung oder durch die Stanzung nicht geschwächt wird.

Die gestellte Aufgabe wird gemäß einem zweiten Vorschlag gelöst, indem das Gehäuse einen durchgehenden Profilschienenabschnitt aufweist und dass der Antriebsmotor innerhalb des Profilschienenabschnittes liegt. Die mit dem Profilschienenabschnitt erzielten Vorteile sind die gleichen wie die gemäß dem ersten Vorschlag. Die Anordnung des Antriebmotors innerhalb der Profilschiene ergibt eine äußerst kompakte Bauweise, so dass der elektromotorische Möbelantrieb auch dann eingesetzt werden kann, wenn die Einbauräume relativ klein sind, wie dies beispielsweise bei Sesseln der Fall ist. Die antriebstechnische Verbindung zwischen dem Antriebsmotor und der Spindel kann auf die verschiedensten Arten gebildet sein. Die gewählte antriebstechnische Verbindung richtet sich ebenfalls nach der Bauform des Möbels. So ist vorgesehen, dass diese antriebstechnische Verbindung mit der Spindel durch eine die Motordrehzahl herabsetzende Getriebeeinheit gebildet wird, deren Achsen sich kreuzen, schneiden oder achsparallel verlaufen. Wenn die aufgebrachte Kraft von einem Antriebsmotor und einer Spindel nicht ausreicht, kann auch der Möbelantrieb mit mindestens zwei rotierend antreibbaren parallel und im Abstand zueinander stehenden Spindeln ausgestattet sein. Jede Spindel wird dann von einem Antriebsmotor angetrieben, so dass entsprechend der Anzahl der Spindeln und der Antriebsmotoren die Kraft erhöht wird. Zweckmäßigerweise sind die Spindeln höhenmäßig und in ihren Längsrichtungen versatzfrei zueinander angeordnet. Es ist außerdem möglich, dass jede Spindel in einem eigenen Profilschienenabschnitt gelagert ist oder dass alle Spindeln in einem gemeinsamen Profilschienenabschnitt gelagert sind.

In besonders vorteilhafter Weise ist vorgesehen, dass in den Profilschienenabschnitt ein Getriebewinkel, vorzugsweise spielfrei eingesetzt ist, wobei der Antriebsmotor an diesem Getriebewinkel festgesetzt ist. Der Getriebewinkel ist klotzartig gestaltet, und hat zwei im Winkel zueinander stehende Flächen. Die Anzahl der Bauteile wird minimiert und somit wird der elektromotorische Möbelantrieb noch kompakt, wenn auch die Spindel mittels wenigstens eines, vorzugsweise eines Wälzlagers im Getriebewinkel gelagert ist. Zweckmäßigerweise wird jedoch die Spindel in zwei Wälzlagern gelagert, wobei die Anordnung so getroffen wird, dass ein Wälzlager als Festlager und das andere Wälzlager als Loslager wirkt. In bevorzugter Ausführung ist der Abtriebszapfen des Antriebsmotors angrenzend an eine Längskante des Profilschienenabschnittes angeordnet, wobei der Getriebewinkel gegenüber dem zugeordneten Rand des Profilschienenabschnittes vorsteht und eine Öffnung für den Abtriebszapfen des Antriebsmotors oder für die Schnecke eines dem Motor nachgeschalteten Schneckentriebes aufweist. Die Schnecke kann auch auf den Abtriebszapfen des Antriebsmotors drehfest aufgesetzt werden oder der Abtriebszapfen des Antriebsmotors könnte als Schnecke ausgelegt sein. In vorteilhafter Weise ist der Getriebewinkel aus zwei Winkelhälften gebildet, wobei die Trennebene quer zur Längsachse der Spindel oder in Richtung der Spindel verlaufen kann, wobei sie bei der letztgenannten Ausführung im Versatz zur Mittellängsachse der Spindel steht. Damit der Getriebewinkel stets lagegerecht steht, ist vorgesehen, dass die dem Antriebszapfen des Antriebsmotors zugewandte Winkelhälfte an der der Trennebene abgewandten Seite einen Zentriersteg aufweist. Dieser Zentriersteg kann so gestaltet sein, dass er über einen bestimmten Bereich einen Ansatz an der Stirnfläche des Antriebsmotors anliegt. Der jeweilige Querschnitt des Profilschienenabschnittes kann vielfältig sein. In einer ersten Ausführungsform könnte der Querschnitt offen sein. Jeder Getriebewinkel ist dann durch diese Öffnung beziehungsweise durch diesen Längsschlitz an die Außenseite des Profilschienenabschnittes geführt. Es ist jedoch auch möglich, dass der Querschnitt des Profilschienenabschnittes in seiner Grundkontur aus einem geschlossenen Profilabschnitt besteht, der partiell geöffnet wird. Die Antriebsteile werden dann als Baueinheit von der Stirnseite her in den Profilschienenabschnitt geschoben oder gezogen. Sofern jedoch ein offener Querschnitt verwendet wird, könnte der Längsschlitz zum Schutz der Antriebsteile durch eine Abdeckkappe verschlossen sein, die abnehmbar ist. Dabei ergibt sich noch der Vorteil, dass in die Abdeckkappe die die Entstellungen der Spindelmutter begrenzenden Endschalter eingesetzt werden können. Sofern jedoch ein als geschlossen anzusehender Querschnitt gewählt wird, kann der Antriebsmotor an jeden beliebigen, jedoch schlitzfreien Schenkel angeflanscht werden. Dazu ist es lediglich notwendig, dass dieser Schenkel mit einer Öffnung versehen ist, durch der Abtriebszapfen des Antriebsmotors gesteckt werden kann. Zweckmäßigerweise sollte diese Bohrung jedoch so groß sein, dass auch die Schnecke noch hindurchgesteckt werden könnte.

Es wäre dann sinnvoll, wenn vor dem Aufstecken der Schnecke auf den Abtriebszapfen darauf noch ein Zentrierring geschoben würde. Sofern der Profilschienenabschnitt mit einem Längsschlitz versehen ist, wird aus Stabilitätsgründen der Antriebsgetriebemotor zweckmäßigerweise an dem gegenüberliegenden Schenkel angeflanscht. Bei Verwendung eines offenen, das heißt, mit einem Längsschlitz versehenen Profils ist es jedoch auch denkbar, dass der Antriebsmotor mit geeigneten Befestigungsmitteln derart zum Profilschienenabschnitt steht, dass die Schnecke außerhalb des Profilschienenabschnittes steht, so dass ein Eingriffsabschnitt des Schneckenrades ebenfalls außerhalb des Profilschienenabschnittes liegt. Sofern der Profilschienenabschnitt mit einem Längsschlitz ausgerüstet ist, sollte der Bereich, über den sich der Schneckentrieb und die Lagerklötze erstrecken, abgedeckt sein. Anstelle einer festen Abdeckkappe könnte jedoch auch ein Abdeckstreifen aus einem flexiblen Material verwendet werden. Dies wäre beispielsweise eine selbstklebende Folie oder dergleichen.

In weiterer Ausgestaltung ist noch vorgesehen, dass zumindest ein Ende des Profilschienenabschnittes als Aufhängeelement gestaltet ist. Dazu könnten zwei parallele Schenkel mit fluchtenden Bohrungen versehen sein, während der diese beiden parallelen Schenkel verbindende Schenkel ausgeklinkt ist. Zumindest ein Ende könnte auch nach Art eines Gabelkopfes gestaltet werden, wenn die Endbereiche von zwei parallel stehenden Schenkeln als Aufhängelaschen mit Bohrungen ausgestattet sind. Sofern es sich um einen Doppelantrieb handelt, wären beide Endbereiche des Profilschienenabschnittes als Aufhängeelemente ausgebildet. Bei einem Einzelantrieb wäre jedoch nur ein Ende des Profilschienenabschnittes mit einem Aufhängeelement ausgestattet. Bei einem solchen Einzelantrieb könnte das mit der Spindelmutter fest verbundene Hubrohr ebenfalls aus Metall bestehen. Der freie Endbereich könnte wiederum mit Bohrungen ausgestattet sein, so dass beispielsweise ein Einhängebolzen oder dergleichen darin eingesetzt werden kann. Die Endschalter sind in einfachster Weise zu befestigen, wenn sie auf der Endschalterleiste am Profilschienenabschnitt befestigt sind.

Der Profilschienenabschnitt kann aus den verschiedensten Werkstoffen gefertigt werden. Bevorzugt wird er jedoch aus einem Metall, beispielsweise aus Aluminium oder Stahl hergestellt. Es kann jedoch auch sogar Holz oder ein holzartiger Werkstoff oder auch ein Kunststoff verwendet werden. Bei den zuvor beschriebenen Ausführungen wurde die Spindel immer rotierend angetrieben. Es ist jedoch auch möglich, dass das abtriebsseitige Glied der antriebstechnischen Verbindung ein Rotationskörper ist, der mit einer Innengewindebohrung versehen ist. Die Spindel wird bei einer solchen Ausführung gegen Drehung gesichert, so dass sie sich in ihrer Längsrichtung je nach Drehrichtung des Rotationskörpers verschiebt. Von der Spindel könnte dann die Linearbewegung abgenommen werden. Gemäß einer weiteren Ausführung ist es jedoch auch denkbar, dass die Spindel ortsfest gehaltert ist, das heißt, sie ist weder drehbar noch in ihrer Längsrichtung verschiebbar. Sofern wiederum ein mit einer Innengewindebohrung versehener Wälzkörper das Abtriebsglied bildet, verfährt bei eingeschaltetem Antrieb der ganze Antrieb auf der Spindel. Der Antrieb würde dann das Antriebselement für das zu verstellende Bauteil bilden. Es ist ferner noch vorgesehen, dass der Antriebsmotor ein Antriebsgetriebemotor ist und dass der Antrieb mindestens eine Spindel aufweist, auf die jeweils oder wenigstens eine Spindelmutter aufgesetzt ist. Bei einer solchen Anordnung ist zumindest die Spindel beziehungsweise sind die Spindeln und die Spindelmutter beziehungsweise die Spindelmuttern in einem Gehäuse angeordnet. Das Gehäuse weist auch hier einen aus Metall, vorzugsweise aus Stahl bestehenden, durchgehenden Profilschienenabschnitt auf, wobei der Antriebsmotor derart am Profilschienenabschnitt steht, dass der Antriebszapfen durch den Profilschienenabschnitt hindurch geführt oder außerhalb desselben steht.

Anhand der beiliegenden Zeichnungen wird die Erfindung noch näher erläutert.

Es zeigen:
- Figur 1: einen erfindungsgemäßen Möbelantrieb in einer Schnittdarstellung,
- Figur 2: den Möbelantrieb gemäß der Figur 1 in einer perspektivischen Darstellung,
- Figur 3: eine weitere Ausführungsform des erfindungsgemäßen Möbelantriebes in einer sprengbildlichen Darstellung,
- Figur 4: den Möbelantrieb nach der Figur 3 in einer Stirnansicht auf den Profilschienenabschnitt im auseinandergezogenen Zustand,
- Figur 5: eine der Figur 5 entsprechende Ansicht, jedoch im zusammengefügten Zustand,
- Figur 6: den Möbelantrieb gemäß den Figuren 3 bis 5 in einer perspektivischen Darstellung,
- Figur 7: eine Variante des Möbelantriebes gemäß der Figur 6 und
- Figuren 8 bis 10: verschiedene Querschnitte des Profilschienenabschnittes und verschiedene Anordnungen des Antriebsmotors.

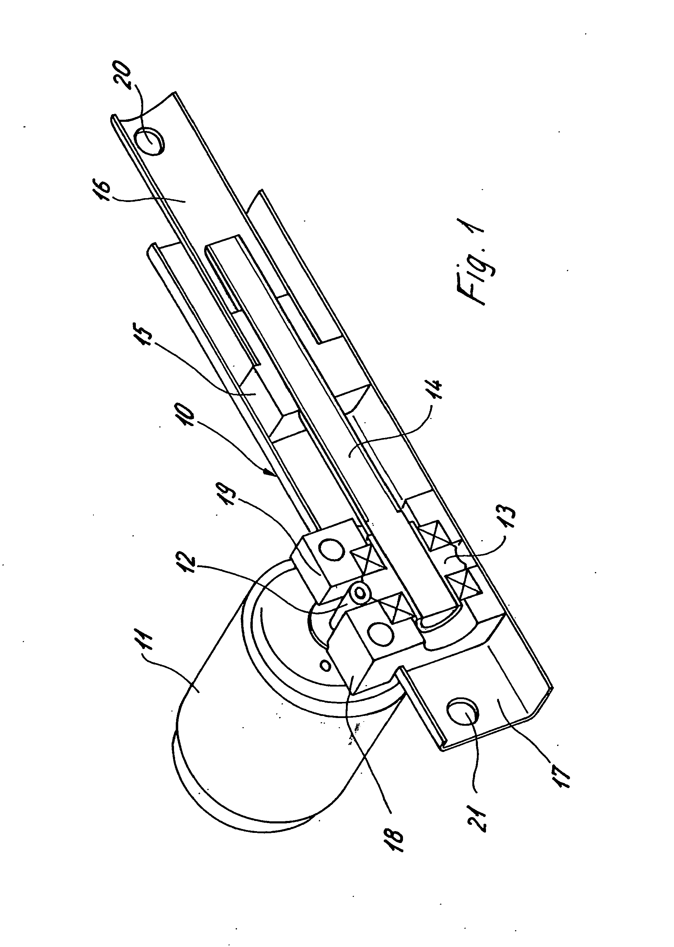

Der in den Figuren 1 bis 10 dargestellte elektromotorische Möbelantrieb 10 ist mit einem Antriebsmotor 11 ausgestattet, auf dessen Abtriebszapfen eine Schnecke 12 drehfest aufgesetzt ist, die mit einem Schneckenrad 13 in Eingriff steht. Der Abtriebszapfen des Antriebsmotors 11 könnte auch als Schnecke ausgebildet sein. Das Schneckenrad 13 ist drehfest auf eine Spindel 14 aufgesetzt oder die Spindel 14 und das Schneckenrad 13 könnten ein einstückiges Bauteil bilden. Auf die Spindel 14 ist eine Spindelmutter 15 aufgesetzt, die gegen Drehung gesichert ist, so dass sie sich in Längsrichtung der Spindel 14 verschiebt, wenn diese sich dreht. Die Spindelmutter 15 trägt ein Hubrohr 16, welches direkt oder indirekt mit einem zu verstellenden Möbelbauteil zu verbinden ist. Das Gehäuse des elektromotorischen Möbelantriebes 10 beinhaltet einen Profilschienenabschnitt 17, der als Tragteil des Antriebes gesehen werden kann. Dieser Profilschienenabschnitt 17 ist aus Stahl gefertigt, könnte jedoch auch aus einem anderen geeigneten Metall bestehen, beispielsweise aus einer Aluminiumlegierung. Bei der Ausführung nach der Figur 1 ist der Profilschienenabschnitt 17 ein offenes Hohlprofil, das heißt, er besitzt einen Längsschlitz. Die Grundkontur des Profilschienenabschnittes 17 ist U- oder C-förmig, wobei die freien Ränder der parallelen Schenkel aufeinander zugerichtet sind. Bei der Ausführung nach der Figur 1 ist die Anordnung so getroffen, dass die Schnecke 12 außerhalb des Profilschienenabschnittes 17 liegt. Die Spindel 14 ist in einem aus zwei Lagerklötzen 18, 19 gebildeten Getriebewinkel mittels Wälzlager gelagert. Der Getriebewinkel liegt abstandsfrei im Profilschienenabschnitt 17, das heißt, er ist schließend darin eingesetzt. Bei der Ausführung nach der Figur 1 ist der Getriebewinkel so gestaltet, dass sie auch noch außerhalb der Kontur des Profilschienenabschnittes 17 liegt. Das Hubrohr 16 könnte entgegen den bisherigen Ausführungen auch aus einem metallischen Rohr, vorzugsweise aus einem Stahlrohr bestehen. Es wäre dann an seinem freien Ende mit zwei zueinander fluchtenden Bohrungen 20 versehen, um das Hubrohr 16 mit einem zu verstellenden Möbelbauteil zu koppeln. Es entfällt dann der sonst übliche Gabelkopf. Auch der Profilschienenabschnitt 17 ist mit zwei fluchtenden Bohrungen 21 versehen, die in den parallelen Schenkeln angeordnet sind. Diese Schenkel stehen senkrecht zur Schnecke 12 und bilden die Seitenstege des Profilschienenabschnittes 17. Auch hier kann der sonst übliche Gabelkopf entfallen. Es ist jedoch auch denkbar, dass die die Bohrungen 21 aufweisenden Endbereiche der Seitenstege als Laschen ausgebildet sind. Außerdem könnten sie gekröpft sein, so dass eine Art Gabelkopf gebildet wird.

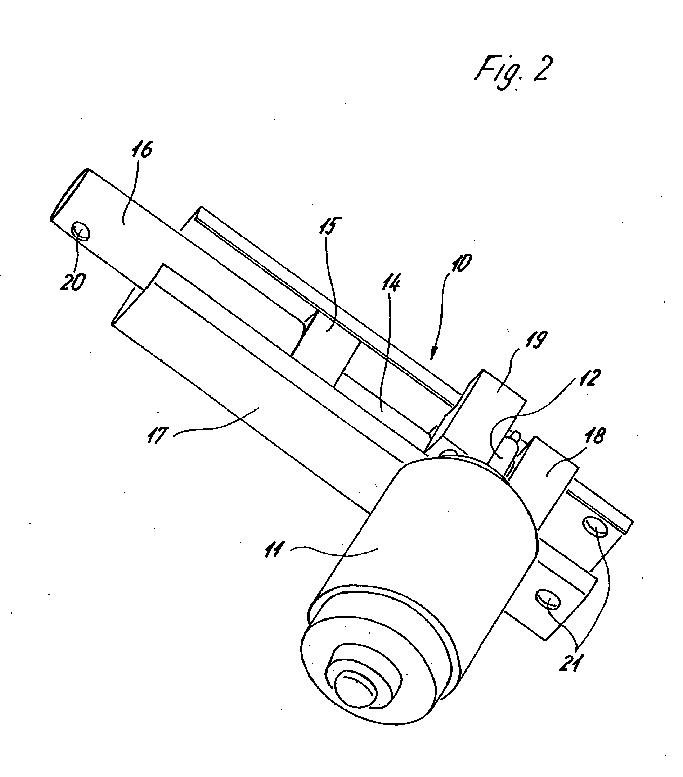

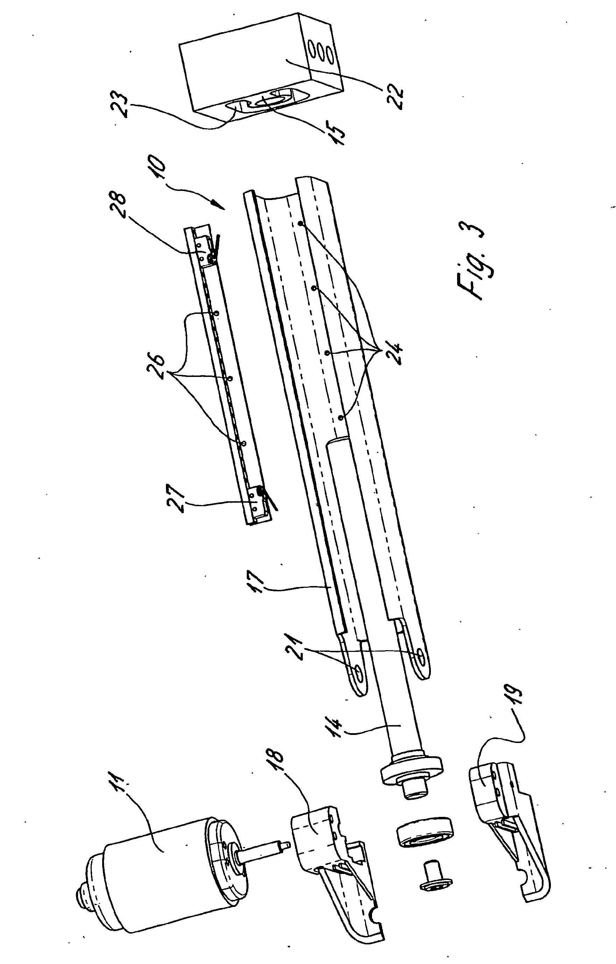

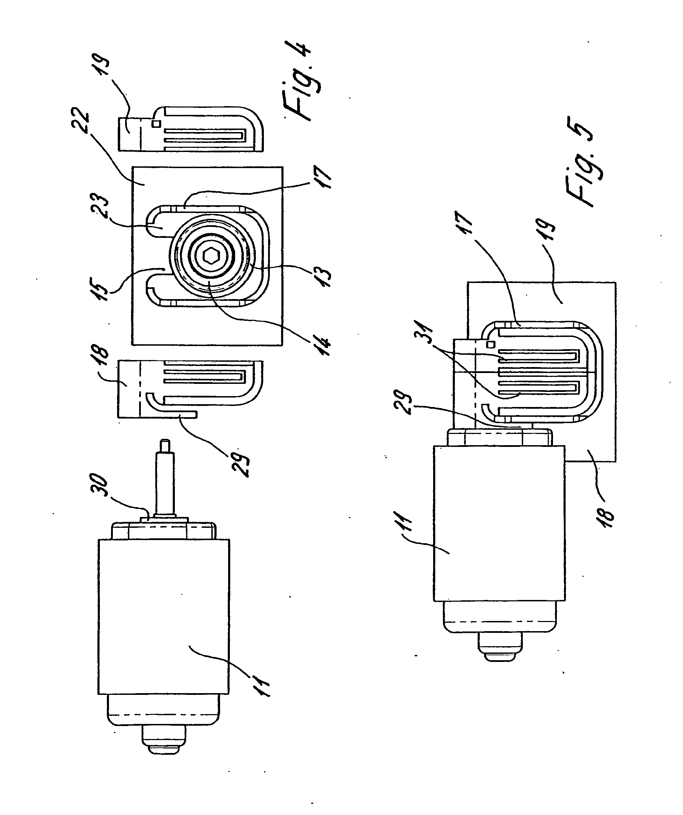

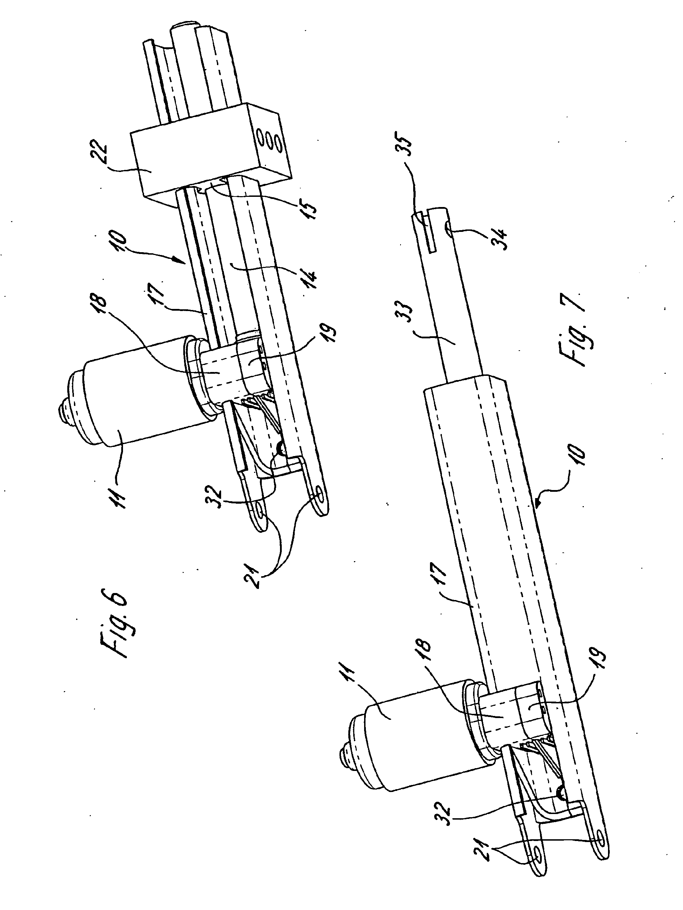

Der in den Figuren 3 bis 6 dargestellte elektromotorische Möbelantrieb 10 unterscheidet sich in Details von der Ausführung gemäß den Figuren 1 und 2. Anstelle des Hubrohres ist die Spindelmutter 15 mit einem Führungsklotz 22 verbunden, der den Profilschienenabschnitt 17 allseitig umgreift, das heißt, der Profilschienenabschnitt 17 bildet eine Führung für den Führungsklotz 22. In nicht näher dargestellter Weise kann der Führungsklotz 22 direkt oder indirekt mit einem zu verstellenden Möbelbauteil gekoppelt werden. Zur Führung dieses Führungsklotzes 22 ist er mit einer durchgehenden Ausnehmung 23 versehen, die der Außenkontur des Profilschienenabschnittes 17 angepaßt ist. Außerdem sind die den Getriebewinkel bildenden Lagerklötze 18, 19 anders ausgelegt. Die Trennebene verläuft in Richtung der Mittellängsachse der Spindel 14, kann jedoch ein klein wenig versetzt zur Drehachse der Spindel stehen, da der der dem Antriebsmotor 11 zugewandt liegende Lagerklotz 18 breiter ist als der dem Antriebsmotor 11 abgewandte Lagerklotz 19. Der Getriebewinkel ist jedoch so gestaltet, dass die Spindel 14 mittels Wälzlager gelagert ist, und dass auch das nicht dargestellte Schneckenrad innerhalb des Getriebewinkels liegt. Wie anhand der Figuren 4 und 5 noch erläutert wird, ist der Getriebewinkel auch mit einer Aussparung versehen, um den Profilschienenabschnitt 17 aufzunehmen. Das dem Getriebewinkel zugeordnete Ende des Profilschienenabschnittes 17 ist laschenartig ausgebildet und trägt die Bohrungen 21, wodurch ein Anschlußelement gebildet wird. Die Enden verlaufen in einem Kreisbogen, wobei die Mittelpunkte der Bohrungen 21 im Zirkelschlag liegen. Zur Begrenzung der Endstellungen des Führungsklotzes 22 beziehungsweise der Spindelmutter 15 ist der mittlere Steg des Profilschienenabschnittes 17 mit Domen 24 versehen, um eine Endschalterleiste 25 festzulegen, die mit entsprechenden Bohrungen 26 versehen ist. Auch die Umkehrung ist möglich. Die Endschalterleiste 25 ist mit zwei nicht näher erläuterten Endschaltern 27, 28 bestückt. Diese Endschalter 27, 28 können in wählbaren Abständen auf der Endschalterleiste 25 festgesetzt werden. Die Figuren 4 und 5 zeigen, dass der Führungsklotz 22 schließend beziehungsweise spielfrei auf dem Profilschienenabschnitt 17 geführt ist. Der dem Antriebsmotor 11 zugewandte Lagerklotz 18 des Getriebewinkels ist an der der Trennebene abgewandten Seite mit einem Zentriersteg 29 versehen, der im montierten Zustand der Figur 5 einen Bund 30 des Gehäuses des Antriebsmotors 11 umgreift. Der Getriebewinkel beziehungsweise die den Getriebewinkel bildenden Lagerklötze 18, 29 sind an der der Spindelmutter 15 abgewandten Seite mit Rippen 31 versehen. Die Figur 6 zeigt den Möbelantrieb gemäß den Figuren 3 bis 5 noch in einer Perspektive. Daraus ergibt sich, dass der die Seitenstege des Profilschienenabschnittes 17 verbindende Mittelsteg ebenfalls mit einer Bohrung 32 versehen ist, die auch für die Aufhängung des Möbelantriebs 10 benutzt werden kann.

Die Ausführung nach der Figur 7 unterscheidet sich von der nach den Figuren 3 bis 6, dass anstelle des Führungsklotzes 22 auf die Spindelmutter ein Hubrohr 33 festgesetzt ist, welches vorzugsweise aus Stahl besteht. Das Hubrohr 33 ist im freien Endbereich mit zwei fluchtenden Bohrungen 34 sowie zwei Schlitzen 35 versehen. Die Bohrungen 34 und die Schlitze 35 können zum Anschluß eines Möbelbauteils verwendet werden.

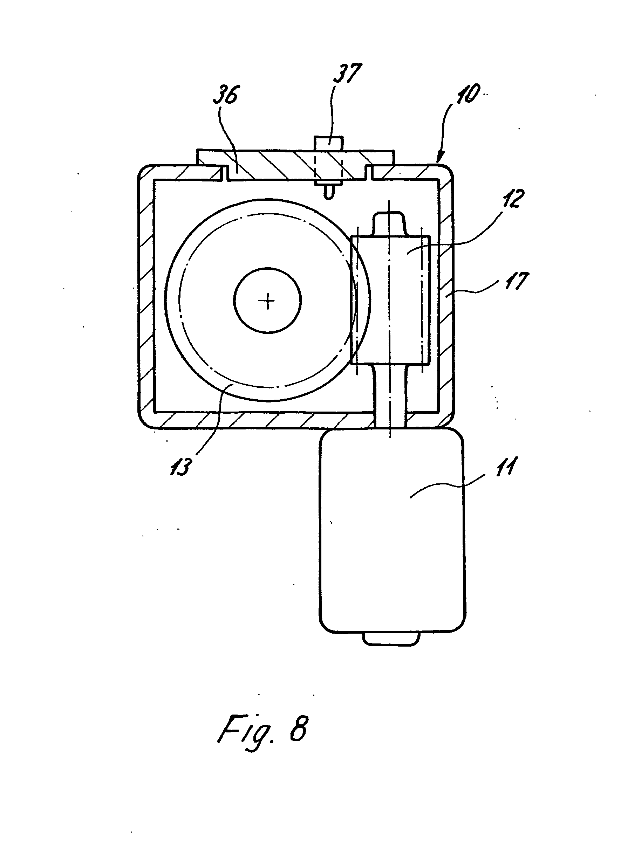

Bei der Ausführung nach der Figur 8 ist der Profilschienenabschnitt 17 im Querschnitt C-förmig gestaltet. Der Antriebsmotor 11 ist an dem dem Längsschlitz gegenüberliegenden Steg angeflanscht. Die Figur 8 zeigt, dass bei dieser Ausführung der Querschnitt des Profilschienenabschnittes 17 äußerst klein sein kann, da nur ein solcher Raum benötigt wird, der die Schnecke 13 und das Schneckenrad 14 aufnimmt. Aus Gründen der vereinfachten Darstellung sind die Spindel 14, die Spindelmutter 15 und das Hubrohr 16 nicht gezeichnet. Der Längsschlitz des Profilschienenabschnittes 17 ist durch eine Abdeckkappe 36 verschlossen. Diese Abdeckkappe 36 kann auf verschiedene Art festgelegt werden, beispielsweise durch Schrauben, jedoch werden Rastverbindungen bevorzugt. In der Abdeckkappe 36 sind zwei im Abstand zueinander stehende Endschalter 37 eingesetzt, um die Endstellungen der nicht dargestellten Spindelmutter 15 zu begrenzen.

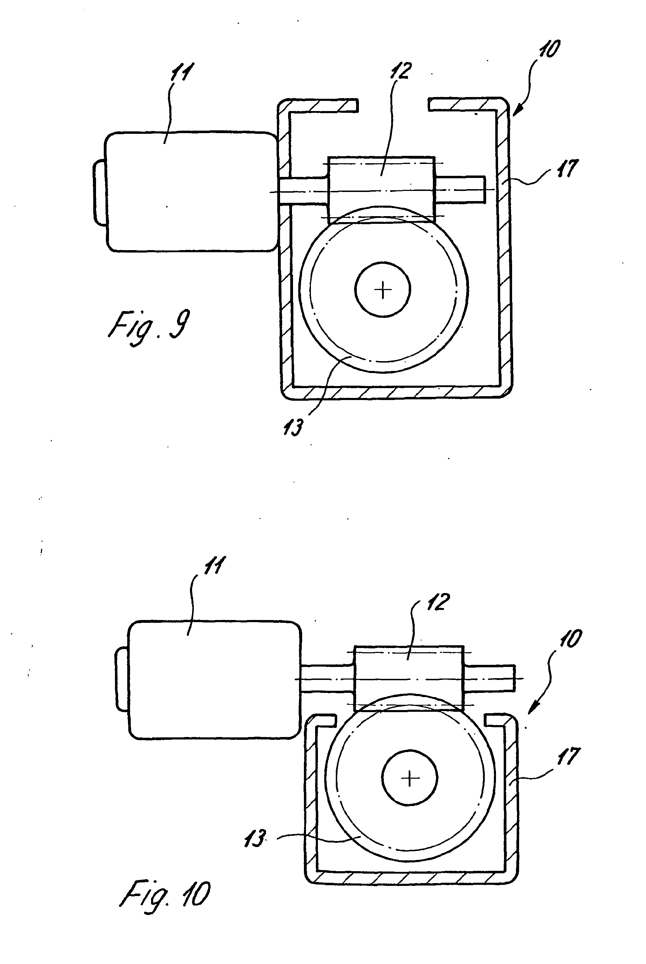

Die Ausführung nach der Figur 9 unterscheidet sich von der nach der Figur 8 durch einen Profilschienenabschnitt 17 mit einem geänderten Querschnitt. Während er bei der Ausführung nach der Figur 8 in seiner Grundkontur quadratisch ist, ist er in der Figur 9 rechteckig, wobei die Höhe größer ist als die Breite. Der Längsschlitz könnte wiederum durch eine Abdeckkappe verschlossen sein. Ferner unterscheidet sich die Ausführung nach der Figur 9 von der nach der Figur 8 noch dadurch, dass der Antriebsmotor 11 an dem an dem Längsschlitz angrenzenden Schenkel angeflanscht ist. Auch bei dieser Ausführung sind die Spindel 14, die Spindelmutter 15 und das Hubrohr 16 nicht gezeichnet.

Für die Ausführung nach der Figur 10 ist ein geringstmöglicher Querschnitt für den Profilschienenabschnitt 17 erforderlich, da der Antriebsmotor 11 in nicht näher dargestellter Weise so an den an dem Längsschlitz angreifenden Schenkel gesetzt ist, dass die Schnecke 13 außerhalb des Profilschienenabschnittes 17 liegt. Das Schneckenrad 14 ragt aus dem Grundquerschnitt des Profilschienenabschnittes 17 mit einem Eingriffsabschnitt heraus. Auch bei dieser Ausführung sind die Spindel 14, die Spindelmutter 15 und das Hubrohr 16 nicht gezeichnet.

Bei den Ausführungen nach den Figuren 8 bis 10 könnte in nicht dargestellter Weise der Antriebsmotor 11 auch an einem Getriebewinkel festgelegt sein.

Die Erfindung ist nicht auf die dargestellten Ausführungsbeispiele beschränkt. Wesentlich ist, dass das Gehäuse einen aus Metall oder einen aus nichtmetallischem Werkstoff bestehenden Profilschienenabschnitt 17 aufweist, der das tragende Bauelement des elektromotorischen Möbelantriebes 10 darstellt.

## Patentansprüche

1. Elektromotorischer Möbelantrieb (10) mit mindestens einem Antriebsmotor (11) und mit mindestens einer Spindel (14) und wenigstens einer Spindelrnutter (15), und bei dem zumindest die Spindel (14) beziehungsweise die Spindeln (14) und die Spindelmutter (15) beziehungsweise die Spindelmuttern (15) in einem Gehäuse angeordnet ist beziehungsweise sind, das Gehäuse einen durchgehenden Profilschienenabschnitt (17) aufweist und dass der Antriebsmotor (11) derart zum Profilschienenabschnitt (17) steht, dass der Abtriebszapfen durch den Profilschienenabschnitt (17) hindurch geführt oder außerhalb desselben steht, **dadurch gekennzeichnet, dass** in dem Profilschienenabschnitt (17) ein Getriebewinkel (18, 19) spielfrei eingesetzt ist, und dass der Antriebsmotor (11) am Getriebewinkel (18, 19) festgesetzt ist.

2. Elektromotorischer Möbelantrieb (10) nach Anspruch 1 **, dadurch gekennzeichnet, dass** das Gehäuse einen durchgehenden Profilschienenabschnitt (17) aufweist und dass der Antriebsmotor (11) innerhalb des Profilschienenabschnittes (17) liegt.

3. Elektromotorischer Möbelantrieb nach Anspruch 1 oder 2, **dadurch gekennzeichnet, dass** die antriebstechnische Verbindung zwischen jeder Spindel (14) durch eine die Motordrehzahl herabsetzende Getriebeeinheit mit sich kreuzenden, schneidenden oder parallelen Achsen gebildet ist.

4. Elektromotorischer Möbelantrieb nach einem oder mehreren der vorhergehenden Ansprüche 1 bis 3, **dadurch gekennzeichnet, dass** der Möbelantrieb mit mindestens zwei rotierend antreibbaren, parallel und im Abstand zueinander stehenden Spindeln (14) ausgestattet ist.

5. Elektromotorischer Möbelantrieb nach Anspruch 4, **dadurch gekennzeichnet, dass** die Spindeln (14) sowohl höhenmäßig wie auch in ihren Längsrichtungen versatzfrei zueinander angeordnet sind.

6. Elektromotorischer Möbelantrieb nach Anspruch 4, **dadurch gekennzeichnet, dass** jede Spindel (14) mit einem Antriebsmotor (11) antriebstechnisch gekoppelt ist.

7. Elektromotorischer Möbelantrieb nach Anspruch 4, **dadurch gekennzeichnet, dass** jede Spindel (14) in einem eigenen Profilschienenabschnitt (17) gelagert ist oder dass alle Spindeln (14) in einem gemeinsamen Profilschienenabschnitt (17) gelagert sind.

8. Elektromotorischer Möbelantrieb nach einem oder mehreren der vorhergehenden Ansprüche 1 bis 7, **dadurch gekennzeichnet, dass** die Spindel (14) mittels wenigstens eines Wälzlagers im Getriebewinkel (18, 19) gelagert ist.

9. Elektromotorischer Möbelantrieb nach einem oder mehreren der vorhergehenden Ansprüche 1 bis 8, **dadurch gekennzeichnet, dass** der Abtriebszapfen des Antriebsmotors (11) angrenzend an eine Längskante des Profilschienenabschnittes (17) angeordnet ist, und dass der Getriebewinkel (18, 19) gegenüber der zugeordneten Randkante vorsteht und eine Öffnung für den Abtriebszapfen des Antriebsmotors (11) oder für die Schnecke (12) aufweist.

10. Elektromotorischer Möbeläntrieb nach einem oder mehreren der vorhergehenden Ansprüche 1 bis 9, **dadurch gekennzeichnet, dass** der Getriebewinkel aus zwei Lagerklötzen (18, 19) besteht, und dass die Trennebene quer oder in Richtung zur Längsachse der Spindel (14) verläuft,

11. Elektromotorischer Möbelantrieb nach Anspruch 10, **dadurch gekennzeichnet, dass** die in Längsrichtung der Spindel (14) verlaufende Trennebene im Versatz zur Drehachse der Spindel (14) steht.

12. Elektromotorischer Möbelantrieb nach einem oder mehreren der vorhergehenden Ansprüche 1 bis 11, **dadurch gekennzeichnet, dass** die dem Antriebszapfen des Antriebsmotors zugewandte Hälfte des Getriebewinkels (18, 19) an der der Trennebene abgewandten Seite einen Zentriersteg (29) aufweist.

13. Elektromotorischer Möbelantrieb nach Anspruch 1 oder 2, **dadurch gekennzeichnet, dass** der Profilschienenabschnitt (17) einen offenen Querschnitt aufweist und dass jeder Lagerklotz (18, 19) durch eine Öffnung hindurch zumindest eine Außenfläche des Profilschienenabschnittes (17) übergreift.

14. Elektromotorischer Möbelantrieb nach Anspruch 13, **dadurch gekennzeichnet, dass** der Querschnitt des Profilschienenabschnittes (17) in seiner Grundkontur rechteckig mit ungleichen Schenkellängen oder quadratisch ausgebildet ist und dass der Profilschienenabschnitt (17) mit im geschlossenen Zuschnitt partielle Öffnungen aufweist.

15. Elektromotorischer Möbelantrieb nach einem oder mehreren der vorhergehenden Ansprüche 1 bis 14, **dadurch gekennzeichnet, dass** ein Schenkel des Profilschienenabschnittes (17) einen Längsschlitz aufweist, der durch eine Abdeckkappe (36) verschlossen ist.

16. Elektromotorischer Möbelantrieb nach Anspruch 15, **dadurch gekennzeichnet, dass** in der Abdeckkappe (36) Endschalter (37) zur Begrenzung der Endstellungen der Spindelmutter (15) angeordnet sind.

17. Elektromotorischer Möbelantrieb nach Anspruch 15, **dadurch gekennzeichnet, dass** das die Motordrehzahl herabsetzende Getriebe aus einer Schnecke (12) und einem damit in Eingriff. stehenden Schneckenrad (13) besteht und dass der Abtriebszapfen des Antriebsmotors (11) durch eine Öffnung eines Schenkels des Profilschienenabschnittes (17) geführt ist und dass diese Öffnung in einem den Längsschlitz gegenüberliegenden Schenkel oder in einem an den Längsschlitz angrenzenden Schenkel angeordnet ist.

18. Elektromotorischer Möbelantrieb nach Anspruch 14, **dadurch gekennzeichnet, dass** das die Motordrehzahl herabsetzende Getriebe aus einer Schnecke (12) und einem damit in Eingriff stehenden Schneckenrad (13) besteht und dass der Antriebsmotor (11) derart versetzt zum Profilscchienenabschnitt (17) steht, dass die Schnecke (12) und ein Eingriffsabschnitt des Schneckenrades (13) außerhalb des Profilschienenabschnittes (17) angeordnet sind.

19. Elektromotorischer Möbelantrieb nach einem oder mehreren der vorhergehenden Ansprüche 1 bis 18, **dadurch gekennzeichnet, dass** zumindest ein Ende des Profilschienenabschnittes (17) als Aufhängeelement ausgebildet ist und dass zumindest in den parallel und im Abstand zueinander stehenden Seitenstegen des Profilschienenabschnittes (17) fluchtende Bohrungen (21) vorgesehen sind.

20. Elektromotorischer Möbelantrieb nach Anspruch 19, **dadurch gekennzeichnet, dass** zumindest in dem die Bohrungen (21) aufweisenden Endbereich die parallel und im Abstand zueinander stehenden Seitenstege als Aufhängelaschen ausgebildet sind.

21. Elektromotorischer Möbelantrieb nach einem oder mehreren der vorhergehenden Ansprüche 1 bis 20, **dadurch gekennzeichnet, dass** das Hubrohr (16) aus Metall, vorzugsweise aus Stahl besteht und dass im freien Endbereich zur Anbindung eines zu verstellenden Möbelbauteiles fluchtende Bohrungen (20) vorgesehen sind.

22. Elektromotorischer Möbelantrieb nach Anspruch 16 **dadurch gekennzeichnet, dass** die Endschalter auf der Endschalterleiste am Profilschienenabschnitt (17) befestigt sind.

23. Elektromotorischer Möbelantrieb nach einem oder mehreren der vorhergehenden Ansprüche 1 bis 22, **dadurch gekennzeichnet, dass** jeder Profilschienenabschnitt (17) aus Metall, vorzugsweise aus Aluminium, Stahl, Holz, einen holzartigen Werkstoff oder einem Kunststoff gefertigt ist.

24. Elektromotorischer Möbelantrieb nach einem oder mehreren der vorhergehenden Ansprüche 1 bis 23, **dadurch gekennzeichnet, dass** das Abtriebsglied der Getriebeeinheit ein Rotationskörper mit einer Innengewindebohrung ist, und dass die damit in Eingriff stehende Spindel (14) gegen Drehung gesichert, jedoch in ihrer Längsrichtung verfahrbar ist.

25. Elektromotorischer Möbelantrieb nach einem oder mehreren der vorhergehenden Ansprüche 1 bis 23, **dadurch gekennzeichnet, dass** das Abtriebsglied der Antriebseinheit ein Wälzkörper mit einer Innengewindebohrung ist, und dass die Spindel (14) ortsfest angeordnet ist, und dass der Möbelantrieb (1.0) in Längsrichtung der Spindel (14) verfahrbar ist.

26. Elektromotorischer Möbelantrieb (10) nach Anspruch 1, **dadurch gekennzeichnet, dass** das Gehäuse einen aus Metall bestehenden, durchgehenden Profilschienenabschnitt (17) aufweist, und dass der Antriebsmotor (11) derart zum Profilschienenabschnitt , (17) steht, dass der Abtriebszapfen durch den Profilschienenabschnitt (17) hindurchgeführt oder außerhalb desselben steht.

## Claims

1. Electromotive furniture drive (10) having at least one drive motor (11) and having at least one spindle (14) and at least one spindle nut (15), and in which at least the spindle (14) or the spindles (14) and the spindle nut (15) or the spindle nuts (15) are arranged in a housing, the housing has a continuous profiled rail section (17) and the drive motor (11) is positioned in relation to the profiled rail section (17) in such a way that the output journal passes through the profiled rail section (17) or is positioned outside the latter, **characterized in that** a gear mechanism bracket (18, 19) is inserted in the profiled rail section (17) without play, and **in that** the drive motor (11) is fixed to the gear mechanism bracket (18, 19).

2. Electromotive furniture drive (10) according to Claim 1, **characterized in that** the housing has a continuous profiled rail section (17), and **in that** the drive motor (11) is situated within the profiled rail section (17).

3. Electromotive furniture drive according to Claim 1 or 2, **characterized in that** the drive connection between each spindle (14) is formed by a gear mechanism unit which reduces the rotational speed of the motor and has crossing, intersecting or parallel axes.

4. Electromotive furniture drive according to one or more of the preceding Claims 1 to 3, **characterized in that** the furniture drive is equipped with at least two spindles (14) which can be driven by rotation and are situated parallel to and at a distance from one another.

5. Electromotive furniture drive according to Claim 4, **characterized in that** the spindles (14) are arranged without an offset in relation to one another both in terms of height and in their longitudinal directions.

6. Electromotive furniture drive according to Claim 4, **characterized in that** each spindle (14) is drive-coupled to a drive motor (11).

7. Electromotive furniture drive according to Claim 4, **characterized in that** each spindle (14) is mounted in its own profiled rail section (17), or **in that** all of the spindles (14) are mounted in a common profiled rail section (17).

8. Electromotive furniture drive according to one or more of the preceding Claims 1 to 7, **characterized in that** the spindle (14) is mounted in the gear mechanism bracket (18, 19) by means of at least one rolling bearing.

9. Electromotive furniture drive according to one or more of the preceding Claims 1 to 8, **characterized in that** the output journal of the drive motor (11) is arranged such that it adjoins a longitudinal edge of the profiled rail section (17), and **in that** the gear mechanism bracket (18, 19) protrudes with respect to the associated peripheral edge and has an opening for the output journal of the drive motor (11) or for the worm (12).

10. Electromotive furniture drive according to one or more of the preceding Claims 1 to 9, **characterized in that** the gear mechanism bracket comprises two bearing blocks (18, 19), and **in that** the separating plane runs transverse to or in the direction of the longitudinal axis of the spindle (14).

11. Electromotive furniture drive according to Claim 10, **characterized in that** the separating plane which runs in the longitudinal direction of the spindle (14) is offset in relation to the axis of rotation of the spindle (14).

12. Electromotive furniture drive according to one or more of the preceding claims, **characterized in that that** half of the gear mechanism bracket (18, 19) which faces the output journal of the drive motor has a centring web (29) on that side which faces away from the separating plane.

13. Electromotive furniture drive according to Claim 1 or 2, **characterized in that** the profiled rail section (17) has an open cross section, and **in that** each bearing block (18, 19) extends over at least one outer area of the profiled rail section (17) through an opening.

14. Electromotive furniture drive according to Claim 13, **characterized in that** the basic contour of the cross section of the profiled rail section (17) is in the form of a rectangle with unequal limb lengths or a square, and **in that** the profiled rail section (17) has partial openings in the closed blank.

15. Electromotive furniture drive according to one or more of the preceding Claims 1 to 14, **characterized in that** one limb of the profiled rail section (17) has a longitudinal slot which is closed by a covering cap (36).

16. Electromotive furniture drive according to Claim 15, **characterized in that** limit switches (37) for limiting the end positions of the spindle nut (15) are arranged in the covering cap (36).

17. Electromotive furniture drive according to Claim 15, **characterized in that** the gear mechanism which reduces the rotational speed of the motor comprises a worm (12) and a worm gear (13) which engages with the said worm, and **in that** the output journal of the drive motor (11) is passed through an opening in a limb of the profiled rail section (17), and **in that** this opening is arranged in a limb which is opposite the longitudinal slot or in a limb which adjoins the longitudinal slot.

18. Electromotive furniture drive according to Claim 14, **characterized in that** the gear mechanism which reduces the rotational speed of the motor comprises a worm (12) and a worm gear (13) which engages with the said worm, and **in that** the drive motor (11) is offset in relation to the profiled rail section (17) in such a way that the worm (12) and an engagement section of the worm gear (13) are arranged outside the profiled rail section (17).

19. Electromotive furniture drive according to one or more of the preceding Claims 1 to 18, **characterized in that** at least one end of the profiled rail section (17) is in the form of a suspension element, and **in that** aligned holes (21) are provided at least in the side webs of the profiled rail sections (17) which are parallel to and at a distance from one another.

20. Electromotive furniture drive according to Claim 19, **characterized in that** the side webs which are parallel to and at a distance from one another are in the form of suspension brackets at least in the end region which has the holes (21).

21. Electromotive furniture drive according to one or more of the preceding Claims 1 to 20, **characterized in that** the lifting tube (16) is composed of metal, preferably of steel, and **in that** aligned holes (20) are provided in the free end region for tying a furniture component which is to be adjusted.

22. Electromotive furniture drive according to Claim 16, **characterized in that** the limit switches are secured to the limit switch bar on the profiled rail section (17).

23. Electromotive furniture drive according to one or more of the preceding Claims 1 to 22, **characterized in that** each profiled rail section (17) is produced from metal, preferably from aluminium, steel, wood, a wood-like material or a plastic.

24. Electromotive furniture drive according to one or more of the preceding Claims 1 to 23, **characterized in that** the output element of the gear mechanism unit is a rotary body with an internal threaded hole, and **in that** the spindle (14) which engages with the said rotary body is secured against rotation but can be moved in its longitudinal direction.

25. Electromotive furniture drive according to one or more of the preceding Claims 1 to 23, **characterized in that** the output element of the drive unit is a rolling body with an internal threaded hole, and **in that** the spindle (14) is arranged such that it is fixed in position, and **in that** the furniture drive (10) can be moved in the longitudinal direction of the spindle (14).

26. Electromotive furniture drive (10) according to Claim 1, **characterized in that** the housing has a continuous profiled rail section (17) which is composed of metal, and **in that** the drive motor (11) is positioned in relation to the profiled rail section (17) in such a way that the output journal passes through the profiled rail section (17) or is positioned outside the latter.

## Revendications

1. Commande de meuble (10) à moteur électrique comportant au moins un moteur d'entraînement (11) et au moins une broche (14) avec au moins un écrou pour broche (15), et dans laquelle au moins la broche (14) ou les broches (14) et l'écrou pour broche (15) ou les écrous pour broche (15) sont disposés dans un boîtier, le boîtier comporte un tronçon de rail profilé (17) continu, et le moteur d'entraînement (11) se situe par rapport au tronçon de rail profilé (17) de manière que le bout d'arbre mené soit guidé à travers le tronçon de rail profilé (17) ou se situe à l'extérieur de celui-ci, **caractérisée en ce que** dans le tronçon de rail profilé (17) est inséré sans jeu un engrenage angulaire (18, 19), et **en ce que** le moteur d'entraînement (11) est fixé sur l'engrenage angulaire (18, 19).

2. Commande de meuble (10) à moteur électrique selon la revendication 1, **caractérisée en ce que** le boîtier comporte un tronçon de rail profilé (17) continu et **en ce que** le moteur d'entraînement (11) se situe à l'intérieur du tronçon de rail profilé (17).

3. Commande de meuble à moteur électrique selon la revendication 1 ou 2, **caractérisée en ce que** la liaison technique d'entraînement entre chaque broche (14) est formée par une unité de transmission réduisant la vitesse de rotation du moteur avec des axes se croisant, se coupant ou parallèles.

4. Commande de meuble à moteur électrique selon une ou plusieurs des revendications 1 à 3 précédentes, **caractérisée en ce que** la commande de meuble est équipée d'au moins deux broches (14) pouvant être entraînées en rotation, parallèles l'une à l'autre et à distance l'une de l'autre.

5. Commande de meuble à moteur électrique selon la revendication 4, **caractérisée en ce que** les broches (14) sont disposées sans décalage l'une par rapport à l'autre aussi bien en hauteur que dans leurs directions longitudinales.

6. Commande de meuble à moteur électrique selon la revendication 4, **caractérisée en ce que** chaque broche (14) est couplée en entraînement par un moteur d'entraînement (11).

7. Commande de meuble à moteur électrique selon la revendication 4, **caractérisée en ce que** chaque broche (14) est montée dans son propre tronçon de rail profilé (17) ou **en ce que** toutes les broches (14) sont montées dans un tronçon de rail profilé (17) commun.

8. Commande de meuble à moteur électrique selon une ou plusieurs des revendications 1 à 7 précédentes, **caractérisée en ce que** la broche (14) est montée dans l'engrenage angulaire (18, 19) au moyen d'au moins un palier de roulement.

9. Commande de meuble à moteur électrique selon une ou plusieurs des revendications 1 à 8 précédentes, **caractérisée en ce que** le bout d'arbre mené du moteur d'entraînement (11) est disposé adjacent à un bord longitudinal du tronçon de rail profilé (17), et **en ce que** l'engrenage angulaire (18, 19) dépasse par rapport à l'arête de bordure associée et présente une ouverture pour le bout d'arbre mené du moteur d'entraînement (11) ou pour la vis sans fin (12).

10. Commande de meuble à moteur électrique selon une ou plusieurs des revendications 1 à 9 précédentes, **caractérisée en ce que** l'engrenage angulaire est constitué de deux blocs d'appui (18, 19) et **en ce que** le plan de séparation s'étend transversalement ou dans la direction de l'axe longitudinal de la broche (14).

11. Commande de meuble à moteur électrique selon la revendication 10, **caractérisée en ce que** le plan de séparation, s'étendant dans la direction longitudinale de la broche (14), est décalé par rapport à l'axe de rotation de la broche (14).

12. Commande de meuble à moteur électrique selon une ou plusieurs des revendications 1 à 11 précédentes, **caractérisée en ce que** la moitié de l'engrenage angulaire (18, 19), associée au bout d'arbre d'entraînement du moteur d'entraînement, comporte une nervure de centrage (29) sur le côté opposé au plan de séparation.

13. Commande de meuble à moteur électrique selon la revendication 1 ou 2, **caractérisée en ce que** le tronçon de rail profilé (17) présente une section transversale ouverte et **en ce que** chaque bloc d'appui (18, 19) passe, à travers une ouverture, sur au moins une surface extérieure du tronçon de rail profilé (17).

14. Commande de meuble à moteur électrique selon la revendication 13, **caractérisée en ce que** la section transversale du tronçon de rail profilé (17) est réalisée rectangulaire dans son contour de base avec des côtés de longueur inégale, ou carrée, et **en ce que** le tronçon de rail profilé (17) présente des ouvertures partielles dans le flan fermé.

15. Commande de meuble à moteur électrique selon une ou plusieurs des revendications 1 à 14 précédentes, **caractérisée en ce qu'**un côté du tronçon de rail profilé (17) présente une fente longitudinale qui est fermée par un capuchon de fermeture (36).

16. Commande de meuble à moteur électrique selon la revendication 15, **caractérisée en ce que** dans le capuchon de fermeture (36) sont disposés des interrupteurs de fin de course (37) pour limiter les positions de fin de course de l'écrou pour broche (15).

17. Commande de meuble à moteur électrique selon la revendication 15, **caractérisée en ce que** la transmission réduisant la vitesse de rotation du moteur est constituée d'une vis sans fin (12) et d'une roue-vis (13) en prise avec celle-ci, et **en ce que** le bout d'arbre mené du moteur d'entraînement (11) est guidé à travers une ouverture d'un côté du tronçon de rail profilé (17), et **en ce que** cette ouverture est disposée dans un côté opposé à la fente longitudinale, ou dans un côté adjacent à la fente longitudinale.

18. Commande de meuble à moteur électrique selon la revendication 14, **caractérisée en ce que** la transmission réduisant la vitesse de rotation du moteur est constituée d'une vis sans fin (12) et d'une roue-vis (13) en prise avec celle-ci, et **en ce que** le moteur d'entraînement (11) est décalé par rapport au tronçon de rail profilé (17) de manière que la vis sans fin (12) et un tronçon de prise de la roue-vis (1 3) soient disposés à l'extérieur du tronçon de rail profilé (17).

19. Commande de meuble à moteur électrique selon une ou plusieurs des revendications 1 à 18 précédentes, **caractérisée en ce qu'**au moins une extrémité du tronçon de rail profilé (17) est réalisée comme élément à accrochage et **en ce que** des perçages (21) alignés sont prévus au moins dans les côtés parallèles et à distance l'un de l'autre du tronçon de rail profilé (17).

20. Commande de meuble à moteur électrique selon la revendication 19, **caractérisée en ce qu'**au moins dans la zone d'extrémité présentant les perçages (21), les côtés parallèles et à distance l'un de l'autre sont réalisés sous la forme de pattes à accrochage.

21. Commande de meuble à moteur électrique selon une ou plusieurs des revendications 1 à 20 précédentes, **caractérisée en ce que** le tube de levage (16) est en métal, de préférence en acier, et **en ce que** dans la zone d'extrémité libre des perçages (20) alignés sont prévus pour l'attache d'un élément de meuble à régler.

22. Commande de meuble à moteur électrique selon la revendication 16, **caractérisée en ce que** les interrupteurs de fin de course sont fixés sur la baguette d'interrupteur de fin de course sur le tronçon de rail profilé (17).

23. Commande de meuble à moteur électrique selon une ou plusieurs des revendications 1 à 22 précédentes, **caractérisée en ce que** chaque tronçon de rail profilé (17) est en métal, de préférence en aluminium, acier, en bois, en un matériau de type bois ou en une matière plastique.

24. Commande de meuble à moteur électrique selon une ou plusieurs des revendications 1 à 23 précédentes, **caractérisée en ce que** l'organe mené de l'unité de transmission est un corps rotatif avec un trou taraudé, et **en ce que** la broche (14) en prise avec celui-ci est bloquée en rotation, mais déplaçable dans sa direction longitudinale.

25. Commande de meuble à moteur électrique selon une ou plusieurs des revendications 1 à 23 précédentes, **caractérisée en ce que** l'organe mené de l'unité d'entraînement est un corps de roulement avec un trou taraudé, et **en ce que** la broche (14) est disposée de manière fixe, et **en ce que** la commande de meuble (10) est déplaçable dans la direction longitudinale de la broche (14).

26. Commande de meuble (10) à moteur électrique selon la revendication 1, **caractérisée en ce que** le boîtier comporte un tronçon de rail profilé (17) continu en métal, et **en ce que** le moteur d'entraînement (11) est disposé par rapport au tronçon de rail profilé (17), de manière que le bout d'arbre mené soit guidé à travers le tronçon de rail profilé (17) ou se situe à l'extérieur de celui-ci.
